# FASCICULE DE BREVET EUROPEEN

(11) **EP 3 301 021 B1**
(45) Date de publication et mention de la délivrance du brevet: **02.10.2019**
(21) Numéro de dépôt: 17188036.2
(22) Date de dépôt: 25.08.2017
(51) Int. Cl.: B64C 25/50, F16F 9/18, F16F 9/32

(54) **ATTERRISSEUR D'AERONEF EQUIPE D'UN DISPOSITIF D'ATTENUATION DE SHIMMY**
FAHRWERK EINES LUFTFAHRZEUGS, DAS MIT EINER VORRICHTUNG ZUR BUGRADFLATTERDÄMPFUNG AUSGESTATTET IST
AN AIRCRAFT UNDERCARRIAGE FITTED WITH A SHIMMY-ATTENUATOR DEVICE

(30) Priorité: 29.09.2016 FR 1659340
(43) Date de publication de la demande: 04.04.2018
(73) Titulaire: Safran Landing Systems, 78140 Vélizy-Villacoublay (FR)
(72) Inventeur: NGUYEN, Nicolas, 78140 VELIZY-VILLACOUBLAY (FR); MALLET, Laurent, 83079 TOULON Cedex 9 (FR); IVALDI, Frédéric, 83079 TOULON Cedex 9 (FR); BLANPAIN, Thierry, 78140 VELIZY-VILLACOUBLAY (FR); HENRION, Philippe, 78140 VELIZY-VILLACOUBLAY (FR)
(74) Mandataire: Lavialle, Bruno François Stéphane

(56) Documents cités:
- EP-A1- 3 048 046
- CA-A1- 2 511 067
- GB-A- 2 263 087
- US-A- 3 499 621

## Description

L'invention concerne un atterrisseur d'aéronef équipé d'un dispositif d'atténuation de shimmy.

### ARRIERE PLAN DE L'INVENTION

Le shimmy est un phénomène vibratoire affectant certains atterrisseurs, et implique un couplage entre des oscillations de flexion et des oscillations de torsion de l'atterrisseur. On connaît des atterrisseurs, notamment des atterrisseurs principaux non équipés d'une commande d'orientation, qui sont équipés d'un dispositif d'atténuation de shimmy placé au niveau de l'axe de l'apex du compas reliant la tige coulissante au caisson de l'atterrisseur. Le dispositif d'atténuation est interposé entre la face latérale externe d'une des branches du compas, et une extrémité de l'axe-pivot articulant les branches du compas entre elles, l'autre extrémité de l'axe-pivot prenant appui sur la face externe de l'autre branche du compas. Lors d'une oscillation de torsion, les branches du compas ont tendance à vouloir se déplacer relativement le long de l'axe-pivot. Le dispositif d'atténuation est équipé d'un organe élastique à seuil de sorte que lorsque le couple de torsion dépasse un seuil déterminé, le dispositif autorise le déplacement des branches du compas à l'encontre d'un effort élastique. Le dispositif d'atténuation est également équipé d'un organe d'amortissement de sorte à générer un effort d'amortissement lors de cet éloignement. Les dispositifs d'atténuation sont portés en porte-à-faux sur le côté du compas, formant ainsi un balourd pouvant générer une fatigue prématurée de la broche de l'apex du compas.

Ces dispositifs d'atténuation sont traditionnellement installés sur des atterrisseurs qui ne sont pas munis d'une commande d'orientation angulaire de la tige coulissante, puisque les oscillations de torsion de ces derniers sont naturellement amorties par les restrictions dans le bloc hydraulique de commande d'orientation. Cependant, le développement récent des commandes d'orientation électromécaniques confèrent aux atterrisseurs qui en sont équipés une rigidité en torsion importante qui, dans certains cas d'espèce, peut justifier l'installation d'un dispositif d'atténuation sur le compas dont la branche supérieure est articulée non pas sur le caisson, mais sur un élément monté tournant sur le caisson et dont la position angulaire est réglée par la commande d'orientation, comme un tube monté tournant à l'intérieur du caisson autour de la tige coulissante et pouvant le cas échéant porter les paliers de coulissement de la tige coulissante, ou un collier monté tournant autour du caisson. CA 2 511 067 A1 divulgue un train d'atterrissage équipé d'un amortisseur de vibrations.

### OBJET DE L'INVENTION

L'invention a pour objet de proposer un atterrisseur pourvu d'un dispositif d'atténuation de shimmy à placer au niveau de l'apex du compas diminuant les impacts sur l'axe-pivot du compas.

### RESUME DE L'INVENTION

En vue de la réalisation de ce but, on propose un atterrisseur d'aéronef selon la revendication 1. Selon l'invention, le dispositif d'atténuation comporte deux modules placés de part et d'autre du compas pour coopérer avec l'axe-pivot.

Ainsi, on divise le dispositif d'atténuation en deux modules placés de part et d'autre du compas, de sorte que l'effet de balourd latéral est très largement atténué, ce qui diminue sensiblement les sollicitations de fatigue de l'axe-pivot.

Selon un premier mode particulier de réalisation de l'invention, le dispositif atténuateur ne comprend un seul organe de rappel porté par l'un des modules, et un seul organe d'amortissement porté par l'autre des modules.

On spécialise ainsi chacun des modules qui peuvent être conçus et fabriqués respectivement par des spécialistes du rappel et de l'amortissement.

Selon un deuxième mode particulier de réalisation de l'invention, les modules comportent chacun un organe de rappel et un organe d'amortissement.

Il est ainsi possible de proposer des modules identiques, interchangeables, ce qui facilite la gestion de leur maintenance et de leur remplacement.

### BREVE DESCRIPTION DES DESSINS

L'invention sera mieux comprise à la lumière de la description qui suit de modes particuliers de réalisation de l'invention, en référence aux figures des dessins annexés parmi lesquelles :
- la figure 1 est une vue en perspective d'un atterrisseur muni d'un dispositif d'atténuation de shimmy selon l'art antérieur ;
- la figure 2 est une vue en perspective partielle du compas de l'atterrisseur de la figure 1 équipé d'un dispositif atténuateur de shimmy selon un premier mode particulier de réalisation de l'invention ;
- la figure 3 est une vue en coupe de la figure 2 selon un plan passant par l'axe géométrique de l'axe-pivot ;
- La figure 4 est une vue en coupe analogue à celle de la figure 3 illustrant un dispositif atténuateur de shimmy selon un deuxième mode particulier de réalisation de l'invention.

### DESCRIPTION DETAILLEE DE L'INVENTION

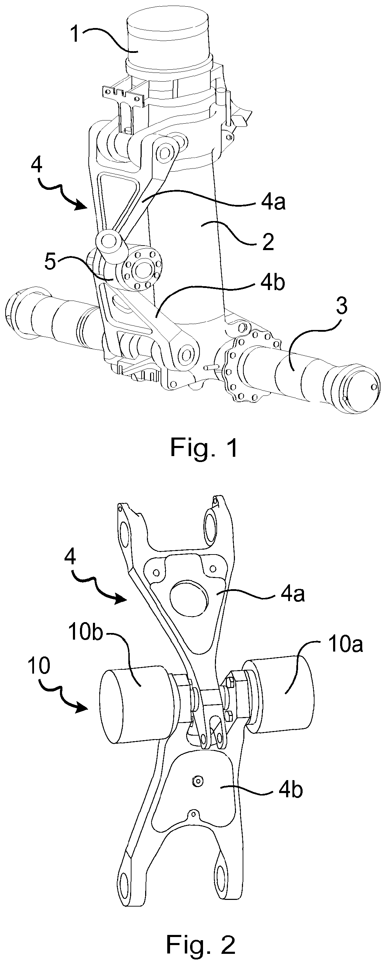

L'invention s'applique à un atterrisseur tel qu'illustré à la figure 1 comportant un caisson 1 rapporté sur la structure de l'aéronef et recevant à coulissement une tige coulissante 2 dont l'extrémité inférieure est munie d'un essieu 3 pour recevoir des roues (non représentées ici). L'atterrisseur est équipé d'un compas 4 comportant une branche supérieure 4a articulée sur le caisson 1 et une branche inférieure 4b articulée sur la tige coulissante 2 les deux branches 4a,4b étant articulées entre elles au niveau d'un apex du compas au moyen d'un axe-pivot non visible ici. Le compas 4 autorise le coulissement de la tige 2 dans le caisson 1, tout en empêchant la rotation de la tige 2 dans le caisson 1. De façon connue en soi, un dispositif atténuateur de shimmy 5 est disposé au niveau de l'une des extrémités de l'axe-pivot pour exercer un effort de rappel à seuil ainsi qu'un effort d'amortissement lors d'un déplacement axial des branches du compas le long de l'axe-pivot provoqué par un couple de torsion tendant à faire tourner la tige coulissante 2 dans le caisson 1.

Comme cela est illustré à la figure 2, l'invention consiste à prévoir un dispositif d'atténuation de shimmy 10 en deux modules 10a et 10b disposés chacun de part et d'autre du compas au niveau de son apex. La répartition des masses est ainsi beaucoup plus équilibrée, diminuant sensiblement l'effet de balourd de la disposition connue de la figure 1. Ici, le dispositif est appliqué à un compas dont l'une des branches 4b se termine en fourche et accueille l'autre branche 4a au centre de la fourche. Le dispositif d'atténuation du shimmy 10 assure en même temps le centrage de la branche 4a dans la branche 4b en laissant un espace e de part et d'autre. Le dispositif d'atténuation de shimmy rappelle les branches dans cette position de repos.

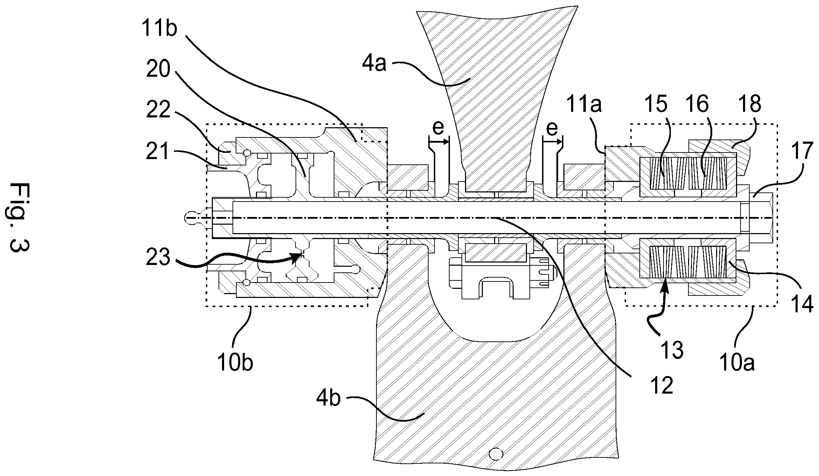

Plus précisément, et comme cela est illustré à la figure 3, les modules 10a, 10b comportent chacun un corps creux 11a, 11b venant chacun prendre appui sur l'une des faces externes des compas 4a,4b et qui est traversé par l'axe-pivot 12.

Le module 10a est un module exerçant un effort de rappel élastique. A cet effet, l'extrémité de l'axe-pivot 12 emprisonne une cage 13 faite ici de deux douilles 14 dans lesquelles sont montées deux empilements de rondelles Belleville 15,16 montés en opposition. Les douilles 14 de la cage 13 sont prisonnières sur l'axe-pivot 12 entre une butée de l'axe-pivot et un écrou terminal 17 permettant de précontraindre les rondelles 15,16. Par ailleurs, les douilles 14 sont prisonnières entre un fond du corps 11a et un écrou 18 rapporté sur le corps 11a. Ainsi le déplacement relatif de l'axe-pivot 12 par rapport au corps 11a n'est possible que si l'effort de déplacement dépasse un effort seuil déterminé par la précontrainte des rondelles Belleville 15,16, et se fait à l'encontre d'un effort de rappel dans la position centrée illustrée à la figure 3.

Le module 10b est un module exerçant un effort d'amortissement, ici de nature hydraulique. L'axe-pivot 12 est solidaire d'un piston 20 coulissant à étanchéité contre la paroi interne du corps 11b pour y définir deux chambres remplies de fluide hydraulique. Le corps 11b est fermé par un fond rapporté 21 retenu sur le corps par un écrou 22. Le piston 20 comporte un orifice de laminage 23 mettant les deux chambres en communication fluidique. Ainsi, le déplacement relatif de l'axe-pivot 12 par rapport au corps 11b se fait à l'encontre d'un effort de laminage du fluide transvasé d'une chambre à l'autre, induisant un amortissement hydraulique.

L'axe-pivot 12 pince la branche 4a et est immobile axialement par rapport à cette branche. La branche 4b est libre de se déplacer le long de l'axe-pivot 12 à l'encontre des efforts de rappel et d'amortissement exercés respectivement par le module 10a et le module 10b et générés par le mouvement relatif de l'axe-pivot 12 par rapport aux corps 11a,11b.

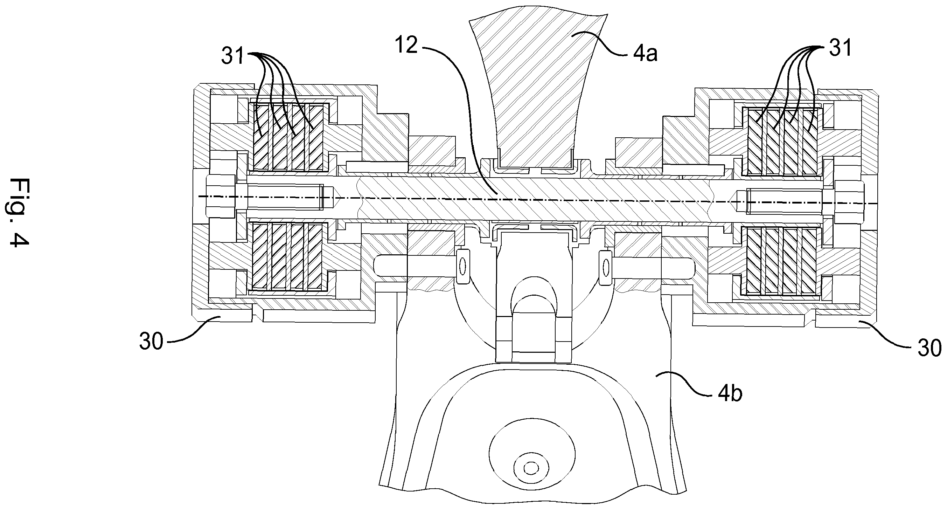

Selon un deuxième mode particulier de réalisation illustré à la figure 4, les deux modules 30 sont identiques et assurent donc à la fois les fonctions de rappel élastique à seuil et d'amortissement. Leur structure est identique à celle du module 10a du mode de réalisation précédent, si ce n'est que les empilements de rondelles Belleville 15,16 sont ici remplacés par des cartouches lamifiées 31 formées chacune d'un empilement de rondelles métalliques et de rondelles en matériau élastomère assurant à la fois les fonctions de rappel élastique à seuil et d'amortissement grâce à leurs propriétés viscoélastiques. Les cartouches 31 sont comme auparavant incluses dans des cages prisonnières de l'axe-pivot 12 qui maintient les rondelles en précontrainte.

L'invention n'est pas limitée à ce qui vient d'être décrit, et englobe toute variante entrant dans le cadre défini par les revendications.

En particulier, bien qu'ici, l'invention ait été décrit en application sur un atterrisseur dépourvu de commande d'orientation, l'invention s'applique également à des atterrisseurs pourvus d'une commande d'orientation pour lesquels la branche supérieure du compas est articulée non pas sur le compas, mais sur un élément monté tournant sur le caisson, et dont la position angulaire est réglée par la commande d'orientation.

Bien que dans le premier mode de réalisation, le module qui assure la fonction de rappel élastique à seuil comporte des empilements de rondelles Belleville, on pourra bien entendu utiliser tout autre moyen élastique, comme des ressorts hélicoïdaux, des lames ...

Bien que dans le deuxième mode de réalisation, les modules sont équipés de cartouche formées d'un empilement de rondelles métalliques et élastomériques, on pourra plus généralement utiliser des dispositifs à base d'élastomère, ne prenant pas forcément la forme d'un empilement de rondelles, mais assurant, comme les cartouches, les fonctions de rappel élastique à seuil et d'amortissement grâce à leurs propriétés viscoélastiques.

## Revendications

1. Atterrisseur d'aéronef muni d'une tige coulissante (2) montée à coulissement dans un caisson (1), et d'un compas (4) ayant une branche (4a) articulée sur le caisson ou sur un élément tournant d'une commande d'orientation de la tige coulissante monté tournant sur le caisson, et une branche (4b) articulée sur la tige coulissante, les branches étant articulées entre elles par un axe-pivot (12), l'atterrisseur étant équipé d'un dispositif d'atténuation de shimmy (10a,10b ; 30,30) placé au niveau de l'axe-pivot du compas, le dispositif d'atténuation comportant des moyens de rappel élastique (15,16 ; 31) à seuil générant un effort de rappel des branches vers une position de repos et des moyens d'amortissement (20,23 ;31) générant un effort d'amortissement lorsque les branches se déplacent axialement le long de l'axe-pivot, tel que le dispositif d'atténuation comporte deux modules (10a,10b ;30,30), chacun des modules étant agencés pour assurer au moins l'une des deux fonctions de rappel élastique à seuil ou d'amortissement, **caractérisé en ce que** les deux modules (10a,10b ;30,30) sont placés de part et d'autre du compas (4) pour coopérer avec l'axe-pivot (12).

2. Atterrisseur selon la revendication 1, dans lequel l'un des modules (10a) est agencé pour assurer la fonction de rappel élastique à seuil, et l'autre des modules est agencé pour assurer la fonction d'amortissement.

3. Atterrisseur selon la revendication 2, dans lequel celui des modules qui est agencé pour assurer le rappel élastique à seuil comporte une cage (13) comprenant deux séries de rondelles Belleville (15,16) montées en opposition et retenues prisonnières sur l'axe-pivot (12) au moyen d'un écrou terminal (17) assurant une précontrainte des rondelles.

4. Atterrisseur selon la revendication 2 dans lequel celui des modules qui est agencé pour assurer la fonction d'amortissement comporte un piston (20) solidaire de l'axe-pivot et délimitant deux chambres remplies de fluide hydraulique et mises en communication fluidique par un orifice de laminage (23).

5. Atterrisseur selon la revendication 1, dans lequel les deux modules (30,30) sont identiques et sont agencés pour assurer tous deux la fonction de rappel élastique à seuil et la fonction d'amortissement.

6. Atterrisseur selon la revendication 5, dans lequel chacun des modules (30) comporte une cage équipée de rondelles en élastomère (31) précontraintes dont les propriétés viscoélastiques assurent la fonction de rappel élastique à seuil et la fonction d'amortissement.

## Patentansprüche

1. Luftfahrzeugfahrwerk, das mit einer Schubstange (2) versehen ist, die verschiebbar in einem Kasten (1) gelagert ist, und mit einem Kniegelenk (4), das einen Schenkel (4a) hat, der an dem Kasten oder an einem Drehelement einer Ausrichtungssteuerung der Schubstange angelenkt ist, das drehend an dem Kasten gelagert ist, sowie einen Schenkel (4b), der an der Schubstange angelenkt ist, wobei die Schenkel miteinander über einen Gelenkbolzen (12) angelenkt sind, wobei das Fahrwerk mit einer Flatterdämpfungsvorrichtung (10a, 10b; 30, 30) ausgestattet ist, die im Bereich des Gelenkbolzens des Kniegelenks angeordnet ist, wobei die Dämpfungsvorrichtung elastische Schwellen-Rückstellmittel (15, 16; 31) umfasst, die eine Rückstellkraft zum Rückstellen der Schenkel in eine Ruhestellung erzeugen, sowie Dämpfungsmittel (20, 23; 31), die eine Dämpfungskraft erzeugen, wenn sich die Schenkel axial entlang des Gelenkbolzens verschieben, wobei die Dämpfungsvorrichtung zwei Module (10a, 10b; 30, 30) umfasst, wobei jedes der Module so ausgebildet ist, dass es mindestens eine der beiden Funktionen aus elastischer Schwellen-Rückstellung oder Dämpfung sicherstellt, **dadurch gekennzeichnet, dass** die beiden Module (10a, 10b; 30, 30) zu beiden Seiten des Kniegelenks (4) angeordnet sind, um mit dem Gelenkbolzen (12) zusammenzuwirken.

2. Fahrwerk nach Anspruch 1, bei dem eines der Module (10a) ausgebildet ist, um die elastische Schwellen-Rückstellfunktion sicherzustellen, und das andere der Module ausgebildet ist, um die Dämpfungsfunktion sicherzustellen.

3. Fahrwerk nach Anspruch 2, bei dem dasjenige der Module, das ausgebildet ist, um die elastische Schwellen-Rückstellfunktion sicherzustellen, einen Käfig (13) umfasst, der zwei Reihen von Belleville-Tellerfedern (15, 16) umfasst, die gegenüberliegend angeordnet sind und auf dem Gelenkbolzen (12) mittels einer Endmutter (17), die eine Vorspannung der Tellerfedern sicherstellt, festgehalten werden.

4. Fahrwerk nach Anspruch 2, bei dem dasjenige der Module, das ausgebildet ist, um die Dämpfungsfunktion sicherzustellen, einen Kolben (20) umfasst, der fest mit dem Gelenkbolzen verbunden ist und zwei Kammern begrenzt, die mit Hydraulikfluid gefüllt sind und über eine Drosselöffnung (23) in Fluidverbindung stehen.

5. Fahrwerk nach Anspruch 1, bei dem die beiden Module (30, 30) identisch und derart ausgebildet sind, dass alle beide die elastische Schwellen-Rückstellfunktion und die Dämpfungsfunktion sicherstellen.

6. Fahrwerk nach Anspruch 5, bei dem jedes der Module (30) einen Käfig umfasst, der mit vorgespannten Tellerfedern (31) aus Elastomer ausgestattet ist, deren viskoelastische Eigenschaften die elastische Schwellen-Rückstellfunktion und die Dämpfungsfunktion sicherstellen.

## Claims

1. Landing gear for aircraft, fitted with a sliding rod (2) mounted to slide in a cylinder (1), and with scissor links (4) having one link (4a) which is hinged to the cylinder or to a rotating member of a system for steering the sliding rod, which member is mounted to rotate on the cylinder, and one link (4b) which is hinged to the sliding rod, the links being hinged to one another by a pivot pin (12), the landing gear being equipped with a shimmy attenuating arrangement (10a, 10b; 30, 30) which is positioned at the pivot pin of the scissor links, the attenuating arrangement comprising means for elastic return (15, 16; 31) at a threshold which generate a force to return the links to a rest position, and damping means (20, 23; 31) which generate a damping force when the links move axially along the pivot pin, such that the attenuating arrangement comprises two modules (10a, 10b; 30, 30), each of the modules being adapted to perform at least one of the two functions of elastic return at a threshold or of damping, **characterised in that** the two modules (10a, 10b; 30, 30) are positioned on either side of the scissor links (4) to co-operate with the pivot pin (12).

2. Landing gear according to claim 1, wherein one of the modules (10a) is adapted to perform the function of elastic return at a threshold, and the other of the modules is adapted to perform the damping function.

3. Landing gear according to claim 2, wherein that one of the modules which is adapted to perform the function of elastic return at a threshold comprises a cage (13) containing two series of disc springs (15, 16) which are mounted opposite ways round and which are held captive on the pivot pin (12) by means of an end nut (17) which is responsible for pre-stressing the disc springs.

4. Landing gear according to claim 2, wherein that one of the modules which is adapted to perform the damping function comprises a piston (20), secured to the pivot pin, which defines two chambers which are filled with hydraulic fluid and which are in fluid-exchanging communication through a throttling orifice (23).

5. Landing gear according to claim 1, wherein the two modules (30, 30) are identical and are both adapted to perform the function of elastic return at a threshold and the damping function.

6. Landing gear according to claim 5, wherein each of the modules (30) comprises a cage fitted with prestressed elastomer discs (31) whose viscoelastic properties allow the function of elastic return at a threshold and the damping function to be performed.
